# EUROPÄISCHE PATENTANMELDUNG

(11) **EP 2 360 007 A2**
(43) Veröffentlichungstag der Anmeldung: **24.08.2011**
(21) Anmeldenummer: 11001524.5
(22) Anmeldetag: 24.02.2011
(51) Int. Cl.: B29C 53/50, B31C 1/00, B29C 65/08, B29K 711/00, B29L 9/00, B29L 23/00

(54) **Verfahren zur Herstellung einer Getränkedose**

(30) Priorität: 24.02.2010 DE 102010009177
(71) Anmelder: Nucleus GmbH, 40233 Düsseldorf (DE)
(72) Erfinder: Tschech, Florian, Dr., 40479 Düsseldorf (DE)
(74) Vertreter: COHAUSZ DAWIDOWICZ HANNIG & SOZIEN

(57) **Zusammenfassung**

Die Erfindung betrifft ein Verfahren zum Herstellen einer Getränkedose für durch Kohlensäure unter Überdruck stehende Getränke wie Bier, Limonade oder Mineralwasser mit einem zylindrischen mehrlagigen Mantel mit einer flüssigkeitsdichten Sperrschicht, mindestens einer Schicht aus Karton oder Papier und einer Innen- und Außenfläche aus verschweißbarem Kunststoff, wobei nach Erstellen des zylindrischen Mantels ein Boden und ein Deckel an diesem befestigt werden, wobei zum Herstellen des zylindrischen Mantels eine mehrschichtige Endlosbahn (5) mit einer Breite, die dem Zylinderumfang plus einer Überlappungsbreite entspricht, über einen Freiarm (1) zu einem zylindrischen Schlauch (6) gebogen und hierbei ständig weiter geschoben wird, wobei die beiden Längsränder (6a,6b) der Endlosbahn (5) einander derart überlappen, dass die Innenfläche eines Längsrandes (6a) auf der Außenfläche des anderen Längsrandes (6b) liegt, so dass ein Rohr mit einer Länge entsteht, die der vielfachen Höhe des Dosenzylinders entspricht, wobei der innerhalb des Innenraums der gebogenen Endlosbahn (5) liegende Freiarm (1) in Höhe des Überlappungsbereichs der Längsränder (6a,6b) eine Schweißfläche trägt, der auf der Schlauchaußenseite eine äußere Schweißfläche gegenüber liegt, um die beiden Längsränder (6a,6b) unter Druck miteinander zu verschweißen, und wobei nach dem Verschweißen der überlappenden Längsränder (6a,6b) der Schlauch (6) in einzelne Zylinder von der Höhe des Dosenmantels geschnitten wird.

## Beschreibung

Die Erfindung betrifft ein Verfahren zum Herstellen einer Getränkedose für durch Kohlensäure unter Überdruck stehende Getränke wie Bier, Limonade oder Mineralwasser mit einem zylindrischen mehrlagigen Mantel mit einer flüssigkeitsdichten Sperrschicht, mindestens einer Schicht aus Karton oder Papier und einer Innen- und Außenfläche aus verschweißbarem Kunststoff, wobei nach Erstellen des zylindrischen Mantels ein Boden und ein Deckel an diesem befestigt werden.

Es ist bekannt, Getränkedosen aus Metall herzustellen. Zum Befüllen dieser Dosen ist erforderlich, sie leer anzuliefern und nach dem Befüllen mit einem Deckel zu verschließen. Das Anliefern leerer Metalldosen führt zu einem erheblichen logistischen Aufwand.

Es ist deshalb vorgeschlagen worden, die Dosen am Ort des Befüllers herzustellen und zu befüllen. Hierzu wurde auch vorgeschlagen, den zylindrischen Mantel aus Karton mehrlagig vor Ort herzustellen und die gebogene Zylinderwand durch eine Schweißnaht zu verschließen. Hierbei hat es sich gezeigt, dass aufgrund des hohen Kohlensäuredruckes die Naht leicht aufreißt.

Aufgabe der Erfindung ist es, ein Verfahren der eingangs genannten Art so zu verbessern, dass die Schweißnaht des zylindrischen Mantels hohen inneren Drücken sicher standhält. Darüber hinaus ist es Aufgabe der Erfindung, ein Verfahren zur Verfügung zu stellen, das bei hoher technischer Einfachheit die Herstellung einer großen Anzahl von Dosen in kurzer Zeit ermöglicht.

Diese Aufgabe wird erfindungsgemäß dadurch gelöst,
- dass zum Herstellen des zylindrischen Mantels eine mehrschichtige Endlosbahn mit einer Breite, die dem Zylinderumfang plus einer Überlappungsbreite entspricht, über einen Freiarm zu einem zylindrischen Schlauch gebogen und hierbei ständig weiter geschoben wird, wobei die beiden Längsränder der Endlosbahn einander derart überlappen, dass die Innenfläche eines Längsrandes auf der Außenfläche des anderen Längsrandes liegt, so dass ein Rohr mit einer Länge entsteht, die der vielfachen Höhe des Dosenzylinders entspricht,
- dass der innerhalb des Innenraums der gebogenen Endlosbahn liegende Freiarm in Höhe des Überlappungsbereichs der Längsränder eine Schweißfläche.trägt, der auf der Schlauch außenseite eine äußere Schweißfläche gegenüber liegt, um die beiden Längsränder unter Druck miteinander zu verschweißen, und
- dass nach dem Verschweißen der überlappenden Längsränder der Schlauch in einzelne Zylinder von der Höhe des Dosenmantels geschnitten wird.

Durch ein solches Verfahren wird eine Mantelnaht geschaffen, die hohen lnnendrücken sicher standhält. Darüber hinaus wird die Herstellung hoher Stückzahlen kontinuierlich in schneller Folge und damit bei geringem Zeitaufwand ermöglicht.

Besonders vorteilhaft ist hierbei, wenn das Schweißen der beiden Längsränder aufeinander durch Ultraschall-Schweißung erfolgt. Auch ist von größtem Vorteil, wenn das Verbinden der beiden überlappenden Längsränder aufeinander durch kontinuierliches Ultraschall-Schweißen mit rotierender Sonotrode und darauf abrollendem Ambossrad erfolgt.

Vorzugsweise wird vorgeschlagen, dass auf dem Freiarm innerhalb des Schlauches ein Ambossrad rotierend gelagert ist, das die innere Schweißfläche bildet, und außerhalb des Schlauches ein Sonotrodenrad rotierend gelagert ist, das die äußere Schweißfläche bildet.

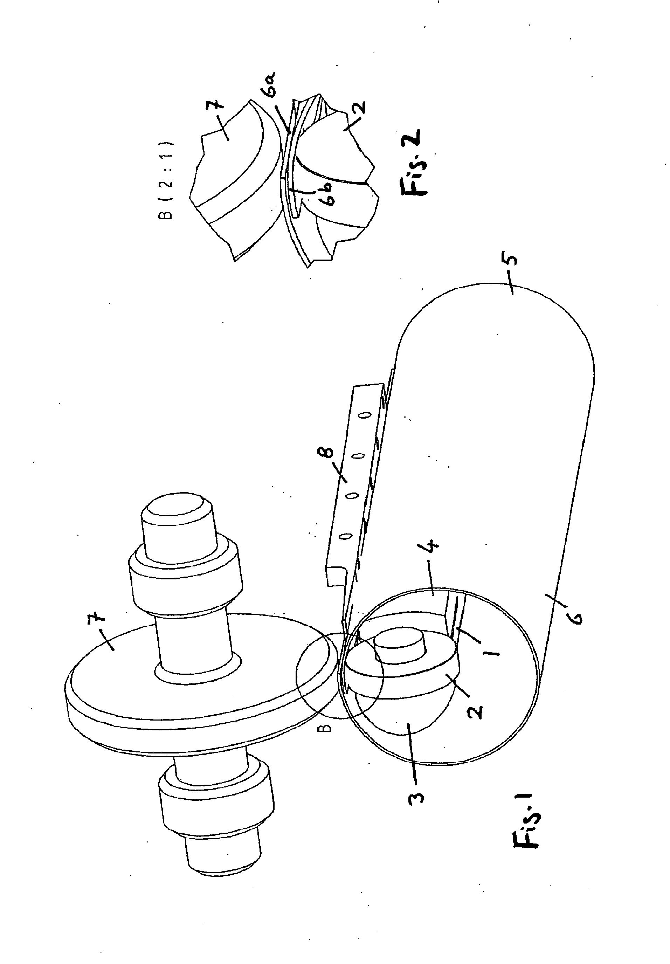

Ausführungsbeispiele der Erfindung werden im Folgenden näher beschrieben. Die Zeichnung zeigt in schematischer Darstellung in
- Fig. 1: eine Ultraschall-Schweißvorrichtung mit einem ständig durchlaufenden zylindrischen Mantel vor dem Teilen in einzelne Behälterzylinder und
- Fig. 2: einen vergrößerten Ausschnitt aus Fig. 1.

Das erfindungsgemäße Verfahren wird auf einer Ultraschall-Schweißmaschine durchgeführt, die einen Freiarm 1 aufweist. Der Freiarm 1 steht am Maschinengestell im Wesentlichen waagerecht vor, wobei am freien Ende des Freiarms oder in einem Abstand zum Freiarmende ein Ambossrad 2 drehbar gelagert ist.

Damit bildet der Freiarm 1 zwischen seinem freien Ende 3 und der Stelle, an der der Freiarm am Maschinengestell befestigt ist, einen Armbereich 4, auf dem eine mehrschichtige Endlosbahn 5 geführt und zu einem Endlosschlauch 6 derart gebogen wird, dass die beiden Längsränder 6a, 6b des Schlauches aufeinander liegen. Hierbei liegt die Unterseite bzw. Innenfläche des oberen Längsrandes 6a auf der Oberseite bzw. Außenfläche des unteren Längsrandes 6b.

Das Überdecken beider Längsränder 6a, 6b erfolgt im oberen Bereich des Schlauches 6. An der Innenseite dieses Überlappungsbereichs liegt die Oberseite des Ambossrades 2 an, dessen Drehachse rechtwinklig und waagerecht zur Längsachse des Schlauches 6 angeordnet ist. Auf der Oberseite liegt ein Sonotrodenrad 7 mit seiner Unterseite an, dessen Drehachse parallel zur Ambossradachse liegt.

Damit werden im Überlappungsbereich die beiden Längsränder 6a, 6b aneinander gedrückt und während des Durchlaufens des Schlauches 6 durch Ultraschall miteinander verschweißt. Im Überlappungsbereich entsteht eine ununterbrochene Längs-Schweißnaht hoher Festigkeit.

Der hierdurch entstehende Endlosschlauch wird danach durch Querschnitte in einzelne Zylinder aufgeteilt, deren Länge der Höhe des Mantels der Getränkedose entspricht. An den einzelnen Zylindern bzw. Mänteln der Dosen wird dann jeweils ein Boden insbesondere aus Blech befestigt, das Innere mit der Getränkeflüssigkeit gefüllt und dann der Deckel insbesondere aus Blech aufgebracht.

In der gezeichneten Ausführung ist der im Schlauch 6 einliegende Freiarmbereich 4 an der Unterseite eines oberhalb des Schlauches 6 angeordneten Tragarms 8 gehalten, wobei das Verbindungsstück zwischen dem Freiarmbereich 4 und dem Tragarm 8 durch den Schlitz zwischen den Längsrändern 6a und 6b an einer Stelle hindurchtritt, an der die Längsränder miteinander noch einen Abstand bilden.

Die Endlosbahn 5 und damit der Schlauch 6 bestehen aus einem mehrlagigen Material mit mindestens einer Schicht aus Karton und/oder Papier, mit mindestens einer flüssigkeitsdichten Sperrschicht und mit einer Innen- und Außenfläche aus verschweißbarem Kunststoff.

## Patentansprüche

1. Verfahren zum Herstellen einer Getränkedose für durch Kohlensäure unter Überdruck stehende Getränke wie Bier, Limonade oder Mineralwasser mit einem zylindrischen mehrlagigen Mantel mit einer flüssigkeitsdichten Sperrschicht, mindestens einer Schicht aus Karton oder Papier und einer Innen- und Außenfläche aus verschweißbarem Kunststoff, wobei nach Erstellen des zylindrischen Mantels ein Boden und ein Deckel an diesem befestigt werden, **dadurch gekennzeichnet,**
- **dass** zum Herstellen des zylindrischen Mantels eine mehrschichtige Endlosbahn (5) mit einer Breite, die dem Zylinderumfang plus einer Überlappungsbreite entspricht, über einen Freiarm (1) zu einem zylindrischen Schlauch (6) gebogen und hierbei ständig weiter geschoben wird, wobei die beiden Längsränder (6a, 6b) der Endlosbahn einander derart überlappen, dass die Innenfläche eines Längsrandes (6a) auf der Außenfläche des anderen Längsrandes (6b) liegt, so dass ein Rohr mit einer Länge entsteht, die der vielfachen Höhe des Dosenzylinders entspricht,
- **dass** der innerhalb des Innenraums der gebogenen Endlosbahn (5) liegende Freiarm (1) in Höhe des Überlappungsbereichs der Längsränder (6a, 6b) eine Schweißfläche trägt, der auf der Schlauchaußenseite eine äußere Schweißfläche gegenüber liegt, um die beiden Längsränder unter Druck miteinander zu verschweißen, und
- **dass** nach dem Verschweißen der überlappenden Längsränder (6a, 6b) der Schlauch (6) in einzelne Zylinder von der Höhe des Dosenmantels geschnitten wird.

2. Verfahren nach Anspruch 1, **dadurch gekennzeichnet, dass** das Schweißen der beiden Längsränder (6a, 6b) aufeinander durch Ultraschall-Schweißen erfolgt.

3. Verfahren nach Anspruch 2, **dadurch gekennzeichnet, dass** das Verbinden der beiden überlappenden Längsränder (6a, 6b) aufeinander durch kontinuierliches Ultraschall-Schweißen mit rotierender Sonotrode (7) und darauf abrollendem Ambossrad (2) erfolgt.

4. Verfahren nach Anspruch 2 oder 3, **dadurch gekennzeichnet, dass** auf dem Freiarm (1) innerhalb des Schlauches (6) ein Ambossrad (2) rotierend gelagert ist, das die innere Schweißfläche bildet, und außerhalb des Schlauches ein Sonotrodenrad (7) rotierend gelagert ist, das die äußere Schweißfläche bildet.
